# EUROPEAN PATENT APPLICATION

(11) **EP 2 738 400 A1**
(43) Date of publication of application: **04.06.2014**
(21) Application number: 12195233.7
(22) Date of filing: 03.12.2012
(51) Int. Cl.: F16B 23/00

(54) **Screw head with a compound hexagonal recess**

(71) Applicant: Fong Prean Industrial Co., Ltd., Kaohsiung City Taiwan (TW)
(72) Inventor: Lin, Teng-Hung, Kaohsiung City (CN)
(74) Representative: Treeby, Philip David William

(57) **Abstract**

A screw head with a compound hexagonal recess includes a hexagonal recess formed with six planes which are connected one by one; six convex cambered surfaces; each apex of the hexagonal recess formed by the six planes being further formed with one of the convex cambered surfaces; between a connection of each plane and an adjacent convex cambered surface being formed with a cambered angle so as to form another hexagonal recess with cambered apexes. The hexagonal recess has a tapered structure, in that the hexagonal recess has a larger size at an opening of the screw head, and a smaller size at an end opposite to the opening. By above mentioned structure, a hexagonal screw driver with or without cambered apexes can be used to drive the screw so that the user only needs to prepare one kind of screw driver.

## Description

### FIELD OF THE INVENTION

The present invention relates to screws, and in particular to a screw head with a compound hexagonal recess.

### BACKGROUND OF THE INVENTION

A screw driver is used to drive a screw. Generally, a head of a screw is formed with a recess for insertion of a driver. In the prior art, the recess may be a straight recess, a cruciform recess, a rectangular recess, a pentagonal recess, a hexagonal recess, and other special forms. However, all these designs are used to fix different kinds of drivers, but it will induce a problem that one form of driver is only suitable for one kind of screw. This makes troublesome and thus it is often that the user must prepare different kinds of drivers in used, but not only the cost is high and the user often needs to carry multiple drivers in working. Thus there is a need for a screw which can suit for various kinds of drivers so as to reduce the burden of users.

### SUMMARY OF THE INVENTION

The improves the defects of the prior art, the present invention provides a screw head with a compound hexagonal recess, in that a hexagonal screw driver with or without cambered apexes can be used to drive the screw so that the user only needs to prepare one kind of screw driver. The cost is low and the work burden is reduced.

To achieve above object, the present invention provides a screw head with a compound hexagonal recess, comprising: a hexagonal recess formed with six planes which are connected one by one; six convex cambered surfaces; each apex of the hexagonal recess formed by the six planes being further formed with one of the convex cambered surfaces; between a connection of each plane and an adjacent convex cambered surface being formed with a cambered angle; wherein the hexagonal recess has a tapered structure, in that the hexagonal recess has a larger sized at an opening of the screw head, and a smaller size at an end opposite to the opening.

### BRIEF DESCRIPTION OF THE DRAWINGS:

Fig. 1 is a schematic view of the screw with compound hexagonal recess according to the present invention.
Fig. 2 is a plane view showing one recess structure of the present invention.
Fig. 3 is a cross sectional view along line A-A in Fig. 2.
Fig. 4 is a cross sectional view along line B-B of Fig. 2.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

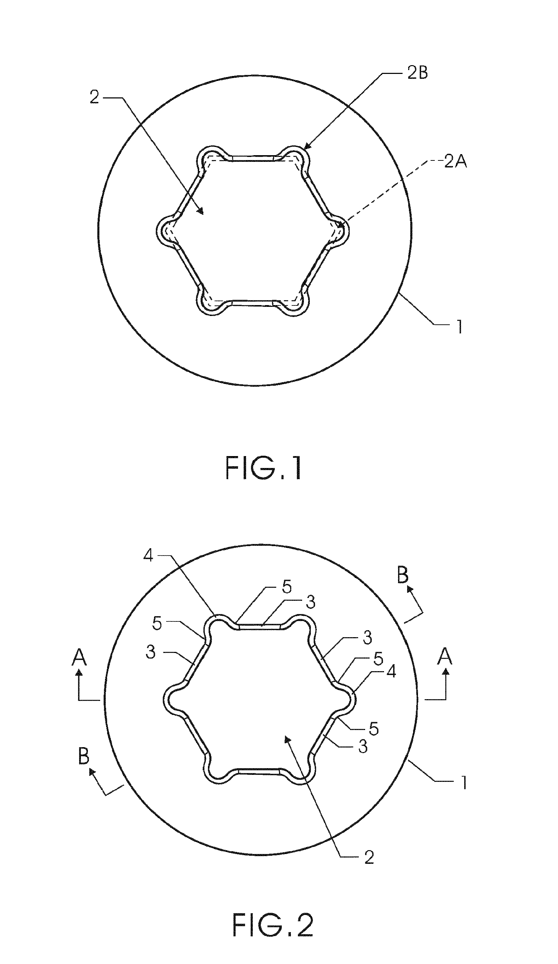

Referring to Figs. 1 and 2, the structure of the present invention is illustrated. The present invention includes the following elements:
A screw head 1 has a compound hexagonal recess 2 therein.
Moreover, as illustrated in Fig. 1, in this compound hexagonal recess 2, other than a hexagonal recess 2A formed with six planes 3, each apex of the hexagonal recess 2 is further formed with a convex cambered surface 4 so as to form as another hexagonal recess 2B with cambered apexes.

As illustrated in Fig. 2, it is illustrated that the hexagonal recess 2 is formed with six planes 3 which are connected one by one. At the apex of the connection of two adjacent planes 3 is formed with a convex cambered surface 4. Referring to Fig. 2, it is illustrated between the connection of each plane 3 and an adjacent convex cambered surface 4 is formed with a cambered angle 5.

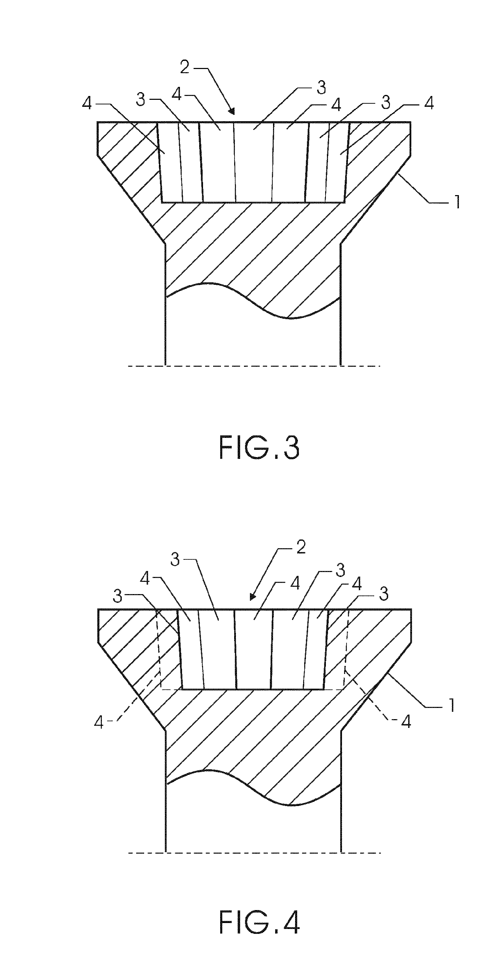

Referring to Figs. 3 and 4, a longitudinal cross sectional view of the screw head 1 of the present invention is illustrated. It is thereof that the hexagonal recess 2 of the present invention has a tapered structure, in that the hexagonal recess 2 has a larger sized at an opening of the screw head 1, and a smaller size at an end opposite to the opening.

By above mentioned structure, a hexagonal screw driver with or without cambered apexes can be used to drive the screw so that the user only needs to prepare one kind of screw driver. The cost is low and the work burden is reduced.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A screw head with a compound hexagonal recess, comprising:
a hexagonal recess 2A formed with six planes 3 which are connected one by one;
six convex cambered surfaces 4; each apex of the hexagonal recess 2 formed by the six planes 3 being further formed with one of the convex cambered surfaces 4; between a connection of each plane 3 and an adjacent convex cambered surface 4 being formed with a cambered angle 5 so as to form as another hexagonal recess 2B with cambered apexes.
wherein the hexagonal recess 2 has a tapered structure, in that the hexagonal recess 2 has a larger sized at an opening of the screw head 1, and a smaller size at an end opposite to the opening.
